# NOUVEAU FASCICULE DE BREVET EUROPEEN

(11) **EP 0 225 836 B2**
(45) Date de publication et mention de la décision concernant l'opposition: **27.12.1995**
(45) Mention de la délivrance du brevet: 08.08.1990
(21) Numéro de dépôt: 86460022.6
(22) Date de dépôt: 14.10.1986
(51) Int. Cl.: A01C 15/00

(54) **Agitateur de distribution par gravité de produit en vrac**
Rührwerk zum Verteilen von losem Material durch Schwerkraft
Stirrer for distributing loose material by gravity

(30) Priorité: 18.10.1985 FR 8515618
(43) Date de publication de la demande: 16.06.1987
(73) Titulaire: SULKY-BUREL S.A., F-35220 Chateaubourg (FR)
(72) Inventeur: Burel, Jacques, F-35220 Chateaubourg (FR)
(74) Mandataire: Martin, Jean-Jacques

(56) Documents cités:
- DE-A- 1 582 035
- DE-A- 2 052 368
- DE-A- 2 835 011
- FR-A- 1 440 768
- FR-A- 2 091 214
- US-A- 2 573 315
- US-A- 2 723 860

## Description

La présente invention concerne un agitateur de distribution par gravité de produit en vrac, généralement en granulés, tel que de l'engrais, contenu dans une trémie, par une ouverture qui se trouve au fond de ladite trémie, cet agitateur étant constitué par un doigt rigide dont une extrémité est libre et dont l'autre extrémité est reliée, à l'intérieur de la trémie, à un arbre situé plus haut que le fond et animé, lors du fonctionnement de l'agitateur, d'un mouvement de vibration. Elle concerne plus particulièrement un tel dispositif monté sur un épandeur d'engrais.

Dans certains épandeurs d'engrais ou semoirs, portés ou traînés par un tracteur, le dosage du produit et sa distribution aux éléments épandeurs ou semeurs s'effectuent par gravité, le produit s'écoulant par une ouverture, prévue dans le fond d'une trémie, dont la grandeur est réglable.

Pour la plupart des engrais et pour certaines graines à semer, notamment les graines de ray- grass, on doit prévoir un dispositif favorisant l'écoulement du produit dans l'ouverture. En pratique, on utilise généralement un doigt rotatif tournant dans un plan horizontal juste au-dessus du fond de la trémie et par conséquent, au-dessus de l'ouverture. Le doigt est entraîné par l'arbre de la machine relié à la prise de force du tracteur ou, dans le cas de certains épandeurs, par le bras de transmission entraînant le disque épandeur.

Les doigts rotatifs tournent à une vitesse relativement grande, généralement celle de la prise de force du tracteur, c'est-à-dire 540 tours/mn environ. Il en résulte que, quelle que soit leur forme, les doigts endommagent le grain, soit en le frappant directement, soit en le projetant par centrifugation sur les parois du fond de la trémie. Le dosage du produit s'en trouve alors perturbé, comme on l'expliquera dans la suite.

De plus, les doigts ne travaillent pas en épaisseur et il peut arriver, pour certains produits qui ont tendance à s'agglomérer, que le produit se tasse au-dessus des doigts, qui n'ont alors plus aucune efficacité.

Outre ces inconvénients, d'autres problèmes se posent lors de l'utilisation de l'appareil sur le terrain. Les semoirs et les épandeurs modernes comportent souvent deux trémies alimentant respectivement des éléments semeurs ou épandeurs de chaque côté du tracteur. Comme on l'a déjà mentionné, le dosage du produit se fait en ouvrant plus ou moins une ouverture dans le fond de chaque trémie. On arrête la distribution de produit aux éléments semeurs ou épandeurs en fermant l'ouverture.

Or, en pratique, il se présente plusieurs cas dans lesquels au moins une des deux trémies est fermée alors que le tracteur et, par conséquent, les doigts rotatifs au fond des trémies, sont toujours en marche. Parmi ceux-ci, l'opération de réglage du débit, qui se fait généralement par essais successifs, et le travail de certaines parcelles de formes particulières s'effectuent avec une seule trémie ouverte. Pendant les demi-tours en bout de champ et des arrêts éventuels, les deux trémies sont fermées. Dans toutes ces situations, le moteur du tracteur continue à tourner et les doigts rotatifs également, dans le fond des trémies. Là où les ouvertures sont fermées, il endommagent les grains, jusqu'à les réduire en poudre si les ouvertures restent fermées trop longtemps. En conséquence, quand les ouvertures sont de nouveau ouvertes, le dosage du produit, qui a perdu ses caractéristiques de granulométrie, est complètement modifié et, tant que la quantité de produit endommagé n'est pas complètement évacuée, la distribution de graines ou d' engrais sur le terrain est mauvaise.

Bien sûr, on pourrait prévoir des doigts rotatifs qui s'arrêteraient de tourner quand les ouvertures au fond des trémies seraient fermées. En pratique, les dispositifs requis augmenteraient le coût des machines.

Les documents FR-A-1 440 768 et US-A-2 573 315 concernent des organes agitateurs à doigt oscillant montés dans une trémie. L'orifice de sortie de la trémie est traversé par le doigt, de sorte qu'il n'est pas possible de s'en servir comme orifice doseur en lui adjoignant simplement un volet réglable. Il est nécessaire de l'équiper d'un doseur additionnel situé en aval de l'orifice. En outre, lorsque la trémie est fermée et remplie de produit, le mouvement d'oscillation des doigts est contrarié par ce produit, ce qui risque de provoquer la détérioration du mécanisme d'entraînement des doigts et du produit lui-même ; cet inconvénient n'est qu'imparfaitement résolu si, comme dans US-A-2 573 315, les doigts sont flexibles.

Un objet de la présente invention consiste donc à prévoir un dispositif simple et bon marché favorisant l'écoulement du produit sans l'endommager, même quand les ouvertures de distribution sont fermées.

Cet objet est atteint grâce au fait que, l'ouverture de fond de trémie étant obturable et l'arbre pouvant continuer à vibrer lorsque cette ouverture est obturée, l'extrémité libre du doigt se trouve juste au-dessus de l'ouverture au moins lorsque le doigt est en position médiane, tandis que la liaison élastique entre l'autre extrémité du doigt et l'arbre est suffisamment ferme pour entraîner le doigt lorsque le produit s'écoule librement par l'ouverture dégagée, mais suffisamment élastique pour absorber le mouvement de vibration de l'arbre lorsque, l'ouverture étant obturée, et l'arbre continuant à vibrer, le doigt a tassé le produit dans le fond de la trémie, et s'est immobilisé.

Quand les ouvertures de distribution sont ouvertes, il se produit une décompression dans la zone d'écoulement et les doigts battent et, par leurs vibrations, remuent les grains en épaisseur. Quand les ouvertures sont fermées, le produit se tasse dans le fond de la trémie et autour des doigts, qui, en raison de l'élasticité de la liaison par laquelle ils sont fixés à leur axe d'entraînement, sont immobilisés jusqu'à ce que les ouvertures soient de nouveau ouvertes.

Selon une caractéristique de l'invention, ledit moyen producteur de vibrations est un axe qu'un moyen moteur fait pivoter alternativement sur lui-même dans les limites d'un angle prédéterminé.

Selon une autre caractéristique de l'invention, ledit axe est horizontal et son moyen d'entraînement comprend un silent-bloc relié à la paroi cylindrique de l'axe, le silent-bloc étant tenu entre les deux branches d'une chape qui se trouve à l'extrémité d'un bras dont l'autre extrémité est fixée à la bague d'un excentrique monté sur l'organe de transmission de la machine.

Selon une autre caractéristique de l'invention, l'excentrique se trouve sur l'arbre de transmission, en amont du boîtier de transmission transmettant le mouvement aux éléments semeurs ou épandeurs.

Selon une autre caractéristique de l'invention, le doigt bat dans un plan sensiblement parallèle à une des parois de la trémie, à une courte distance de ladite paroi.

Selon une autre caractéristique de l'invention, le doigt bat dans un plan sensiblement vertical, à l'aplomb de l'ouverture de la trémie.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une vue schématique en coupe transversale montrant la partie arrière d'un épandeur d'engrais comportant deux trémies, et
- la figure 2 est une vue schématique montrant le système d'entraînement de l'axe portant les doigts selon l'invention.

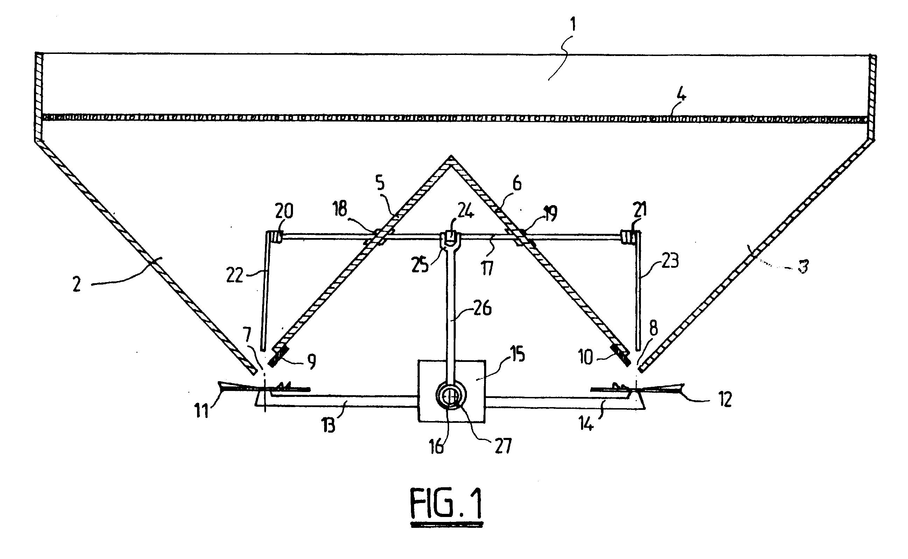

La machine, représentée en coupe à la figure 1, est un épandeur d'engrais comportant un bac de chargement 1 dont la partie inférieure est divisée transversalement en deux trémies 2 et 3. Au-dessus des trémies 2 et 3, un tamis 4 est prévu, pour empêcher le produit de pénétrer en agglomérats dans les trémies, lors du chargement. Les parois internes respectives 5 et 6 des trémies 2 et 3 forment un dièdre ouvert vers le bas. Les bords inférieurs des parois 5 et 6 sont légèrement au-dessus du fond des trémies, pour former des ouvertures 7 et 8. Les bords inférieurs des parois 5 et 6 supportent des volets de réglage et de fermeture 9, 10 des ouvertures 7 et 8. La configuration en pointe des trémies permet un écoulement intégral du produit qu'elles contiennent. Bien entendu, au lieu d' ouvertures obliques 7 et 8, on pourrait utiliser des trémies à ouvertures horizontales.

Au-dessous des ouvertures 7, 8, se trouvent des dispositifs non représentés de positionnement du produit sur des disques d'épandage 11, 12.

Les disques 11 et 12 sont entraînés en rotation par des arbres transversaux 13 et 14 reliés par un boîtier de renvoi d'angle 15 à un arbre de transmission longitudinal 16 prévu pour être couplé à la prise de force d'un tracteur. Le système d'entraînement des disques pourrait également comprendre des courroies.

Un axe horizontal 17, orienté transversalement, traverse les parois 5 et 6, dans des paliers 18 et 19. L'axe 17 a une extrémité à l'intérieur de chaque trémie, sensiblement au-dessus des ouvertures 7 et 8. L'axe 17 est libre de tourner sur lui-même, mais il est bloqué longitudinalement. A chacune des extrémités de l'axe 17, est fixé un ressort à boudin 20 ou 21, sensiblement dans le prolongement de l'axe 17. Les extrémités externes des ressorts à boudin 20 et 21 sont respectivement prolongées par des doigts rectilignes, rigides et sensiblement verticaux 22 et 23 dont les extrémités libres se trouvent juste au-dessus des ouvertures 7 et 8. Les doigts 22 et 23 battent dans des plans sensiblement verticaux. En variante, les extrémités de l'axe 17 peuvent être très proches des parois 5 et 6 et les doigts sont alors sensiblement parallèles à celles-ci.

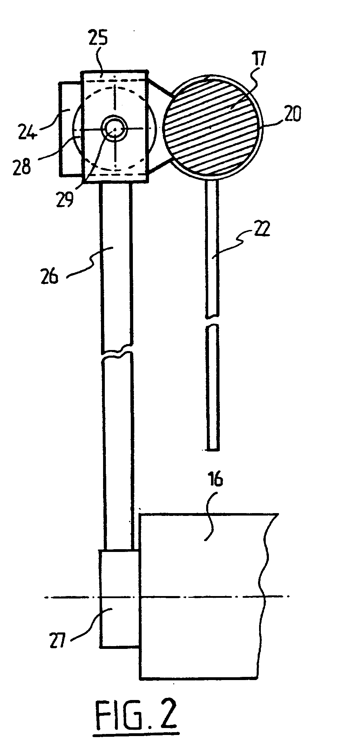

L'axe 17 est solidaire, sur son côté avant, en son milieu, à l'intérieur du dièdre formé par les parois 5 et 6, d'une petite biellette 24 horizontale et dirigée vers l'avant de la machine, c'est-à-dire vers soi quand on regarde la figure 1. Quand la biellette 24 est horizontale, les extrémités inférieures des doigts 22 et 23 sont sensiblement au-dessus du centre des ouvertures 7 et 8. La biellette 24 comporte un trou dans lequel est passé le cylindre en caoutchouc 28 d'un silent-bloc cylindrique dont l'axe 29, figure 2, est tenu entre les deux branches d'une chape 25 prolongée vers le bas par un bras sensiblement vertical 26. L'extrémité inférieure du bras 26 est fixée à la bague d'un excentrique 27 monté sur l'arbre longitudinal 16, en amont, par conséquent, du boîtier de transmission 15. Des rapports de vitesses différents peuvent être envisagés dans le boîtier 15, qui ne modifient pas la vitesse d'entraînement des doigts 22 et 23.

Quand l'arbre 16 tourne, entraîné par la prise de force d'un tracteur, l'excentrique 27 imprime à l'extrémité inférieure du bras 26 un mouvement circulaire selon un cercle de petit diamètre. L'extrémité supérieure du bras 26, sous la forme de la chape 25 fixée à la biellette 24, ne peut se déplacer que dans un plan vertical, et elle est alors animée d'un mouvement alternatif dans un plan vertical, mouvement qu'elle transmet à la biellette 24 au moyen du silent-bloc 28-29. Il en résulte donc un pivotement angulaire alternatif de l'axe 17.

Quand les trémies 2 et 3 sont vides et que le système est en marche, le pivotement alternatif de l'axe 17 est transmis aux doigts 22 et 23 par l'intermédiaire des ressorts 20 et 21. Les doigts 22 et 23 battent au-dessus des ouvertures 7 et 8. En pratique, l'amplitude du pivotement de l'axe 17 est, à titre d'exemple, d'environ 15° de part et d'autre d'une position dans laquelle les extrémités des doigts 22 et 23 sont sensiblement au-dessus du centre des ouvertures 7 et 8. A un tour de l'arbre 16 correspond donc un déplacement angulaire de quatre fois 15°, c'est-à-dire 60°. A ce sujet, on peut remarquer que les extrémités des doigts 22 et 23 se déplacent à une vitesse qui est trois fois moindre que celle des extrémités de doigts rotatifs deux fois moins longs, ce qui correspond à peu près à la réalité. Il en résulte donc une agression moins importante des grains.

Quand les trémies 2 et 3 contiennent du produit et que les ouvertures 7 et 8 sont fermées, le produit est tassé autour des doigts 22 et 23. Le pivotement alternatif de l'axe 17 est transmis aux ressorts à boudin 20 et 21 qui l'absorbent du fait que les doigts 22 et 23 sont emprisonnés dans la masse du produit.

Lorsqu'on ouvre les ouvertures 7 et 8, l'écoulement du produit provoque une décompression dans la masse de celui-ci, au-dessus des ouvertures. Il en résulte une certaine libération des doigts 22 et 23, suffisante pour que les ressorts 20 et 21, au lieu de continuer à absorber le mouvement angulaire de l'axe 17, le transmettent, au moins partiellement, aux doigts 22 et 23. Ceux-ci agitent alors le produit sur toute leur longueur. Ils ont donc l'avantage de travailler dans l'épaisseur du produit, contrairement à des doigts rotatifs horizontaux.

Le silent-bloc utilisé avec la biellette 24 permet d'absorber les efforts parasites dus aux composantes transversales du mouvement de l'extrémité inférieure du bras 26 et aux composantes longitudinales des mouvements de la biellette 24 et de la chape 25. Une biellette rigide ne supporterait pas longtemps de tels efforts ou imprimerait des vibrations insupportables à l'ensemble de la machine.

Bien que le dispositif décrit ait été conçu pour des machines agricoles, il peut bien sûr être appliqué dans d'autres domaines. D'autre part, dans l'exemple qui vient d'être décrit, les doigts 22 et 23 étaient sensiblement verticaux, mais ils pourraient également être obliques ou même sensiblement horizontaux à la condition que les zones de leurs extrémités libres soient au-dessus des ouvertures des trémies et que ces extrémités soient soumises à des vibrations.

## Revendications

1. Agitateur de distribution par gravité de produit en vrac, généralement en granulés, tel que de l'engrais, contenu dans une trémie (2, 3) par une ouverture (7, 8) se trouvant au fond de celle-ci, cet agitateur étant constitué par un doigt (22, 23) rigide dont une extrémité est libre et dont l'autre extrémité est reliée, à l'intérieur de la trémie (2, 3) à un arbre (17) situé plus haut que le fond et animé, lors du fonctionnement de l'agitateur, d'un mouvement de vibration, caractérisé en ce que l'ouverture (7, 8) étant obturable et l'arbre (17) pouvant continuer à vibrer lorsque cette ouverture (7, 8) est obturée, l'extrémité libre du doigt (22, 23) se trouve juste au-dessus de ladite ouverture (7, 8) au moins lorsque le doigt (22, 23) est en position médiane, tandis que la liaison élastique (20, 21) entre l'autre extrémité du doigt (22, 23) et l'arbre (17) est suffisamment ferme pour entraîner le doigt lorsque le produit s'écoule librement par l'ouverture (7, 8) dégagée, mais suffisamment élastique pour absorber le mouvement de vibration de l'arbre (17) lorsque, l'ouverture (7, 8) étant obturée et l'arbre (17) continuant à vibrer, le doigt (22, 23) a tassé le produit dans le fond de la trémie (2, 3), et s'est immobilisée.

2. Agitateur selon la revendication 1, caractérisé en ce que le moyen producteur de vibrations est un axe (17), un moyen moteur (16, 28, 25, 26) faisant pivoter alternativement l'axe (17) sur lui-même dans les limites d'un angle prédéterminé.

3. Agitateur selon la revendication 2, caractérisé en ce que l'axe (17) est horizontal et en ce que le moyen d' entraînement dudit axe est constitué par un silent-bloc (28) relié à la paroi cylindrique de l'axe (17), le silent-bloc étant tenu entre les branches d'une chape (25) qui se trouve à l'extrémité d'un bras (26) dont l'autre extrémité est fixée à la bague d'un excentrique (27) monté sur un arbre moteur rotatif.

4. Agitateur selon la revendication 3, monté sur un épandeur d'engrais ou un semoir, caractérisé en ce que l'excentrique se trouve sur l'arbre de transmission (16), en amont du boîtier de transmission (15) transmettant le mouvement aux éléments semeurs ou épandeurs.

5. Agitateur selon l'une des revendications 1 à 4, caractérisé en ce que le doigt (22, 23) bat dans un plan sensiblement parallèle à une des parois de la trémie (2, 3), à une courte distance de ladite paroi.

6. Agitateur selon l'une des revendications 1 à 4, caractérisé en ce que le doigt (22, 23) bat dans un plan sensiblement vertical, à l'aplomb de l'ouverture (7, 8) de la trémie (2, 3).

## Claims

1. Stirrer for distributing by gravity loose material, generally granulated, such as fertilizer, contained in a hopper (2, 3) through an opening (7, 8) located at the base thereof, this stirrer being formed by a rigid lug (22, 23) whereof one end is free and whereof the other end is connected, inside the hopper (2, 3), to a shaft (17) located higher than the base and caused to vibrate when the stirrer is operating, characterized in that, with the opening (7, 8) being sealable and the shaft (17) being able to continue to vibrate when this opening (7, 8) is sealed, the free end of the lug (22, 23) is just above said opening (7, 8), at least while the lug (22, 23) is in the central position, while the resilient connection (20, 21) between the other end of the lug (22, 23) and the shaft (17) is rigid enough to move the lug along when the product flows freely through the released opening (7, 8) but is sufficiently resilient to absorb the vibration movement of the shaft (17) when, with the opening (7, 8) being sealed and the shaft (17) continuing to vibrate, the lug (22, 23) has packed the product into the base of the hopper (2, 3) and is immobilized.

2. Stirrer according to Claim 1, characterized in that the means of producing vibrations is a shaft (17), with a driving means (16, 28, 25, 26) pivoting the shaft (17) on it in alternation within the limits of a predetermined angle.

3. Stirrer according to Claim 2, characterized in that the shaft (17) is horizontal, and in that the means for driving the said shaft is formed by a flexible mounting (28) connected to the cylindrical wall of the shaft (17), the flexible mounting being held between the legs of a fork joint (25) within is at the end of an arm (26) whereof the other end is fixed to the ring of an eccentric (27) mounted on a rotating drive shaft.

4. Stirrer according to Claim 3, mounted on a fertilizer spreader or a sowing machine, characterized in that the eccentric is on the gear shaft (16) upstream of the gear box (15) transmitting the movement to the sowing or spreading elements.

5. Stirrer according to one of Claims 1 to 4, characterized in that the lug (22, 23) beats in a plane substantially parallel to one of the walls of the hopper (2, 3) and a short distance from the said wall.

6. Stirrer according to one of Claims 1 to 4, characterized in that the lug (22, 23) beats in a substantially vertical plane straight above the opening (7, 8) of the hopper (2, 3).

## Patentansprüche

1. Rührer zum Verteilen von losem, im allgemeinen körnigem Material, wie Dünger, das sich in einem Trichter (2, 3) befindet, mittels Schwerkraft über eine Öffnung (7, 8), die sich am Boden desselben befindet, wobei der Rührer aus einem steifen Arm (22, 23) besteht, dessen eines Ende frei ist und dessen anderes Ende im Inneren des Trichters (2, 3) mit einer Welle (17) verbunden ist, die sich oberhalb des Bodens befindet und beim Betrieb des Rührers zu einer Vibrierbewegung angeregt wird,
dadurch gekennzeichnet, daß die Öffnung (7, 8) verschließbar ist und die Welle (17) weitervibrieren kann, wenn diese Öffnung (7, 8) verschlossen ist, und daß das freie Ende des Arms (22, 23) sich knapp oberhalb der Öffnung (7, 8) zumindest dann befindet, wenn der Arm (22, 23) sich in der Mittelstellung befindet, während die elastische Verbindung (20, 21) zwischen dem anderen Ende des Arms (22, 23) und der Welle (17) ausreichend fest ist, um den Arm mitzunehmen, wenn das Material frei durch die freigemachte Öffnung (7, 8) ausläuft, jedoch ausreichend elastisch ist, um die Vibrierbewegung der Welle (17) zu absorbieren, wenn, während die Öffnung (7, 8) verschlossen ist und die Welle (17) weitervibriert, der Arm (22, 23) das Material am Boden des Trichters (2, 3) festgestampft hat und stehengeblieben ist.

2. Rührer nach Anspruch 1, dadurch gekennzeichnet, daß das Mittel zum Erzeugen von Vibrationen eine Welle (17) ist, wobei ein Antrieb (16, 28, 25, 26) die Welle (17) innerhalb eines vorbestimmten Winkelbereiches um ihre Achse hin und her dreht.

3. Rührer nach Anspruch 2, dadurch gekennzeichnet, daß die Welle (17) horizontal ist und daß der Antrieb der Welle von einer elastischen Halterung (28) gebildet wird, welche mit der zylindrischen Wand der Welle (17) verbunden ist, wobei die elastische Halterung zwischen den Schenkeln einer Gabel (25) gehalten ist, die sich an dem Endabschnitt eines Armes (26) befindet, dessen anderer Endabschnitt an dem Ring eines Exzenters (27) befestigt ist, der an einer drehbaren Antriebeswelle angebracht ist.

4. An einer Düngerstreumaschine oder einer Sämaschine angebrachter Rührer nach Anspruch 3, dadurch gekennzeichnet, daß der Exzenter auf der Eintriebsseite des Getriebegehäuses (15) auf der Getriebewelle (16) sitzt, welche die Bewegung auf die Sä- oder Streuelemente überträgt.

5. Rührer nach einem der Ansprüche 1 bis 4, dadurch gekennzeichnet, daß der Arm (22, 23) in einer Ebene schwingt, die im wesentlichen zu einer der Wände des Trichters (2, 3) parallel ist, und zwar in einem geringen Abstand von der Wand.

6. Rührer nach einem der Ansprüche 1 bis 4, dadurch gekennzeichnet, daß der Arm (22, 23) in einer Ebene schwingt, die im wesentlichen vertikal liegt, und zwar senkrecht über der Öffnung (7, 8) des Trichters (2, 3).
